(19) Europäisches Patentamt
European Patent Office
Office européen des brevets

(11) Veröffentlichungsnummer: **0 049 834**
**B1**

(12) # EUROPÄISCHE PATENTSCHRIFT

(45) Veröffentlichungstag der Patentschrift: **05.12.84**

(51) Int. Cl.³: **B 01 D 19/04**, C 08 G 77/46, D 06 P 1/52, D 06 P 1/673

(21) Anmeldenummer: **81107852.6**

(22) Anmeldetag: **02.10.81**

(54) **Entschäumungsverfahren für kontinuierliche Färbeprozesse.**

(30) Priorität: **15.10.80 DE 3038983**

(43) Veröffentlichungstag der Anmeldung: **21.04.82 Patentblatt 82/16**

(45) Bekanntmachung des Hinweises auf die Patenterteilung: **05.12.84 Patentblatt 84/49**

(84) Benannte Vertragsstaaten: **AT BE CH DE FR GB LI**

(56) Entgegenhaltungen:
**EP - A - 0 003 285**
**EP - A - 0 025 822**
**FR - A - 2 088 522**
**FR - A - 2 137 935**
**FR - A - 2 184 576**
**FR - A - 2 279 843**
**US - A - 3 629 308**

(73) Patentinhaber: **BAYER AG, Konzernverwaltung RP Patentabteilung, D-5090 Leverkusen 1 Bayerwerk (DE)**

(72) Erfinder: **Steinberger, Helmut, Dr., Winand-Rossi-Strasse 36, D-5090 Leverkusen 1 (DE)**
Erfinder: **Kortmann, Wilfried, Auf dem Dreische 3, D-5800 Hagen 5 (DE)**
Erfinder: **Tuschen, Jürgen, D-5203 Much/Siefen (DE)**

**EP 0 049 834 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Vefahren zum kontinuierlichen Färben unter Entschäumung, wobei der Entschäumer im wesentlichen aus

a) mindestens 80 Gew.-% eines Polyoxyalkylen-Siloxan-Copolymers der allgemeinen Formel:

$$[R^1Si\,(OSiR_2)_n]_mZ_{m-1}\,(OR^2)_{m+2},$$

in der

R eine gegebenenfalls halogensubstituierte Alkylgruppe mit bis zu 4 C-Atomen,

$R^1$ den Substituenten R bzw. einen Phenylrest,

$R^2$ eine Gruppe der Zusammensetzung

$R^3(OCH_2CH_2)_x(OCH_2CH_3)_y$–,

Z eine difunktionelle Einheit –O– oder

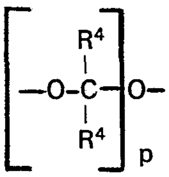

darstellt, wobei

$R^3$ einen Kohlenwasserstoffrest mit bis zu 6 C-Atomen,

$R^4$ unabhängig voneinander Wasserstoff oder $R^3$,

n eine Zahl zwischen 3 und 40,

m eine Zahl zwischen 1 und 15,

x eine Zahl zwischen 0 und 68,

y eine Zahl zwischen 0 und 52,

x + y eine Zahl zwischen 1 und 68,

p eine Zahl zwischen 2 und 12 bedeutet, und

b) 0,5 bis 20 Gew.-% eines hydrophoben Siliciumdioxids, besteht.

Die erfindungsgemäss eingesetzten Polyoxyalkylen-Polysiloxan-Copolymeren sind Gegenstand einer älteren Anmeldung (EP-A 25 822).

Der erfindungsgemäss eingesetzte Entschäumer wird dadurch hergestellt, dass ein Organopolysiloxan der allgemeinen Formel

$$R^1Si(OSiR_2)_nU_{3-a-b}Cl_aW_b,$$

in der

U einen Rest einer niedrigen einbasischen Carbonsäure mit bis zu 4 C-Atomen, vorzugsweise einen Acetatrest, und

W einen Rest einer fluorierten Alkansulfonsäure darstellt, wobei

a gleich oder kleiner 1 und

b gleich oder kleiner als 0,5 ist, das durch Umsetzung von $R^1SiCl_3$ mit einem Diorganopolysiloxan in Gegenwart fluorierter Alkansulfonsäure bzw. deren Salze in überschüssiger einbasischer Carbonsäure erhalten wird, mit einem Gemisch von $R^2OH$ und H–Z–H, dessen Zusammensetzung durch die Kettenlänge n des Organopolysiloxangliedes bestimmt wird, in Gegenwart einer Base in einem organischen Lösungsmittel umgesetzt wird, und gegebenenfalls mit 0,5 bis 20 Gew.-% eines hydrophoben Siliciumdioxids vermischt wird.

Das erfindungsgemässe Verfahren eignet sich zur Anwendung in einem kontinuierlichen Färbe- und/oder Ausrüstungsverfahren für Polmaterial und textile Flächengebilde, bestehend aus natürlichen oder synthetischen Fasermaterialien oder Mischungen solcher Fasern untereinander.

Aus Textilveredlung 8 (1971), Nr. 11, S. 708–711 ist ein Verfahren bekannt geworden, nach dem gewirkte Textilien in einer rotierenden Trommel mit einem feinblasigen, einphasigen, wässrigen Schaum gefärbt werden, der durch spezielle, anionaktive oder nichtionogene Hilfsmittel gebildet wird, und der gleichzeitig Farbstoffe bzw. andere Chemikalien zu deren Fixierung enthält. Diese Methode wurde in der Absicht entwickelt, das Färbegut in einem extrem kurzen Flottenverhältnis färben zu können; woraus ein geringer Energie- und Wasserbedarf sowie eine gegenüber anderen Färbeverfahren relativ geringere Abwasserbelastung resultiert.

Zu diesem Zweck wird der flüssige Anteil im Gesamtvolumen des Schaumes möglichst klein gehalten. Nach dem Verteilen des Schaumes mittels der Zentrifugalkraft in der Färbetrommel bei Raumtemperatur wird der Trommelinhalt mit Dampf oder Heissluft auf die Farbstoff-Fixiertemperatur aufgeheizt, die Ware für eine gewisse Zeit bei dieser Temperatur behandelt, sodann gekühlt und geschleudert. Es handelt sich bei dieser Arbeitsweise um ein diskontinuierliches Verfahren, das infolge der Benutzung der Trommel nicht für Stückware, sondern nur für Fertigartikel geeignet ist.

Die Weiterentwicklung dieses Verfahrens bezieht sich gemäss DE-OS 2 402 353 auf ein kontinuierliches Aufbringen eines stabilen Schaumes auf das zu färbende Textilgut, wobei der stabile Schaum sowohl den erforderlichen Farbstoff, als auch die weiterhin benötigten Hilfsmittel enthält. Der Flüssigkeitsgehalt des Schaumes wird zusammen mit der aufgetragenen Höhe der Schaumschicht zur Regulierung der Auftragsmenge und damit zur Einstellung der Farbtiefe verwendet.

Der sich nach der Schaumablage auf die Polware anschliessende Dämpfungsschritt soll bewirken, dass die aufgetragene Schaumschicht zerfällt, die in den Schaumlamellen befindliche Flottenflüssigkeit an die Pol- oder Gewebefasern übergeht und diese benetzt und der Farbstoff die für eine ausreichende Fixierung auf der Faser erforderliche Temperatur erhält. Hierzu wird die mit der Schaumschicht belegte Ware gewöhnlich durch einen Kanal geführt, in dem sich eine gesättigte Wasserdampfatmosphäre befindet (100 °C).

Der gebildete Schaum dient dem gleichmässigen Auftragen und der Verteilung der verschäumten Flotte auf der Ware. Im Anschluss daran ist der verschäumte Zustand der Flotte nicht mehr erforderlich und muss wieder aufgehoben werden.

Die Zerstörung der aufgetragenen Schaumschicht stellt ein besonderes Problem dieses Färbeverfahrens dar. Als Verfahrensvorschläge zur Schaumbeseitigung wurden entweder der spontane Zerfall der aufgetragenen Schaumschicht aufgrund der besonderen Zusammensetzung eines zeitlich begrenzt beständigen Schaumes in Verbindung mit einer entsprechend gesteuerten Warengeschwindigkeit oder ein ausgelöster Schaumzerfall infolge Zufuhr eines schaumzerstörenden Mittels (etwa Aufsprühen einer Lösung eines Entschäumers oder Kontakt der Schaumoberfläche mit einer Walze, die mit einer schaumzerstörenden Lösung beschickt ist) genannt.

Die erwähnten Verfahren zur Zerstörung der Schaumschicht besitzen jedoch Nachteile. In vielen Fällen ist es nicht möglich, der Färbeflotte und somit dem daraus hergestellten Schaum ein für das betreffende Textilgut ausreichendes Benetzungsvermögen zu verleihen, ohne die hierfür geeigneten Hilfsmittel zuzusetzen. Diese Hilfsmittel besitzen aber in vielen Fällen eine stark schaumstabilisierende Wirksamkeit, was die Schaffung von zeitlich begrenzt beständigen Schäumen unmöglich macht.

Das Verfahren, den Schaumzerfall durch Zufuhr schaumzerstörender Mittel (beispielsweise Aufsprühen) einzuleiten, kann dadurch erschwert werden, dass eine rasche Zerstörung des Schaumes auch an solchen Stellen bewirkt wird, an denen der den Farbstoff tragende Schaum noch nicht ausreichend tief in das Textilmaterial eingedrungen ist (Polware). Hierdurch können sich Unregelmässigkeiten der Färbung ergeben und unter Umständen Stellen zurückbleiben, die nicht eingefärbt sind.

Das ausreichend tiefe Eindringen des Farbschaumes in den Pol wird bei höheren Polwaren meist dadurch erreicht, dass die Ware nach Auftrag der Schaumschicht über einen Vakuumspalt geführt wird, der den aufgetragenen Schaum so weit in die Ware hineinzieht, dass sich nach diesem Vorgang ein Teil des Schaumes im Pol befindet. Durch diese Massnahme wird jedoch dieser Anteil des Schaumes der unmittelbaren Durchmischung mit dem aufgetragenen Schaumzerstörungsmittel entzogen. Dies kann entweder zur Folge haben, dass die Entschäumung innerhalb des Pols nicht rasch genug erfolgt und es zum Aufblähen der Schaumschicht im Dämpfungsvorgang kommt, oder dass durch die Kapillaradhäsion bestimmter Entschäumer die zwischen den Fasern des Poles befindliche Flottenflüssigkeit rasch bis auf das Grundgewebe durchfällt. Das Ergebnis ist, dass nur die Polspitze und der Polfuss gefärbt sind.

Aus den gleichen Gründen wie bei der Aufbringung von schaumzerstörenden Substanzen durch Aufspühen kann auch das Heranbringen der Schaumschicht an eine Walze, die mit einem schaumzerstörenden Mittel versehen wurde, nicht befriedigend sein.

Es war nun Aufgabe der vorliegenden Erfindung, ein Verfahren zu schaffen, das die angeführten Nachteile nicht besitzt, das schnell wirksam ist und das universell einsetzbar ist.

Die erfindungsgemässe Aufgabe wurde dadurch gelöst, dass man der Färbeflotte, die ausser den erforderlichen Farbstoffen auch andere Hilfsmittel enthalten kann, noch bestimmte, in Wasser lösliche oder dispergierbare Entschäumer auf Basis von Polyether-Siloxan-Copolymeren zusetzt.

Die erfindungsgemässen Polyether-Siloxan-Copolymeren gestatten die Herstellung homogener Farbstoff- und Hilfsmittelflotten sowie ihre problemlose Verschäumung zu stabilen und bis zu Temperaturen von 50 °C nicht zerfallenden Schäumen mit der erforderlichen oder erwünschten Feinporigkeit der Schaumbläschen.

Erst im sich anschliessenden Dämpfungsschritt erfolgt durch den erfindungsgemässen Entschäumer ein zügiger Zerfall des aufgetragenen Schaumes. Hierbei werden an den Vorgang des Schaumzerfalls im allgemeinen bestimmte Anforderungen gestellt, nämlich, dass der Schaum möglichst ohne starke Volumenvergrösserung zerfällt. Überraschenderweise ist dies bei Anwendung der erfindungsgemässen Entschäumer der Fall.

Andere Entschäumer auf organischer Basis sind in der Hitze (Sattdampfatmosphäre) stark flüchtig, was zur Folge hat, dass der Entschäumer während des Dämpfungsvorganges oder einer Behandlung mit Heissluft aus dem System austritt. Dies führt zu unkontrollierter und ungleichmässiger Schaumentwicklung, was unegale Färbungen zur Folge hat.

Handelsübliche Entschäumer auf Basis von Siliconen entschäumen bereits bei Temperaturen, bei denen die Verschäumung der Flotte erfolgt, so stark, dass sich kein stabiler Schaum erzeugen lässt. Weiterhin ist auch die entschäumende Wirksamkeit von handelsüblichen Entschäumern auf Basis von Polyether-Siloxan-Copolymeren bei den Verschäumungstemperaturen bereits so stark, dass entweder kein stabiler Schaum erzeugt werden kann oder eine über das akzeptierbare Mass hinausgehende Wässerung des Schaumes während der Auftragsphase auftritt.

Es war daher überraschend, dass die erfindungsgemässen Entschäumerzubereitungen die Herstellung von stabilen, nicht wässernden Schäumen zur Färbung von Textilmaterialien bei den Temperaturen, bei denen die Verschäumung der Färbeflotte erfolgt, ermöglicht, während im Dämpfungsschritt der erwünschte zügige Schaumzerfall eintritt.

Die für die Herstellung der Entschäumungsmittel erforderlichen Polyoxyalkylen-Polysiloxan-Copolymeren sind an sich bekannte Stoffe. Ihre Herstellung erfolgt durch Umsetzung von Polyetherolen mit siliciumfunktionellen Siloxanen. Dazu werden z.B. Polyetherole in stöchiometrischem Verhältnis in Gegenwart eines Säurefängers mit linearen oder verzweigten äquilibrierten acyloxyhaltigen Organopolysiloxanen umgesetzt, deren Herstellung in der DE-OS 2 802 668 beschrieben ist.

Der Anteil des Polyether-Siloxan-Copolymeren an der erfindungsgemäss eingesetzten Entschäumerzubereitung soll mindestens 80 Gew.-% des

gesamten Mittels ausmachen, vorzugsweise liegt es jedoch in einer Menge von 86 bis 94% vor.

In den Siloxan-Polyoxyalkylen-Copolymeren der allgemeinen Formel

$$[R^1Si(OSiR_2)_n]_mZ_{m-1}\,(OR^2)_{m+2}$$

kann die Zahl der Dimethylsiloxaneinheiten, wie sie durch m und n definiert wird, von 8 bis 60 reichen, wobei n zwischen 8 und 30 liegt und m 2 oder 3 beträgt.

Der durch die Gruppierung $OR^2$ gekennzeichnete Polyetheranteil des Siloxan-Polyoxyalkylen-Copolymeren besteht vorzugsweise aus Strukturen der Formel

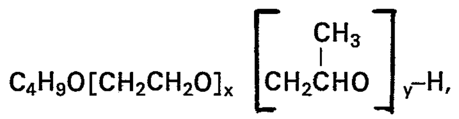

in denen der Wert x zwischen 8 und 40 schwankt und der Wert für y vorzugsweise zwischen 6 und 30 liegt.

Beispiele für die Gruppen R sind die Methyl-, Chlormethyl-, Ethyl- und Propylreste, $R^3$ ist vorzugsweise ein $OC_4H_9$-Rest, möglich sind jedoch ebenfalls $CH_3O$, $C_2H_5O$–, $C_3H_7O$– oder $C_3H_5O$-Reste.

Beispiele für die Verbindung H–Z–H sind $H_2O$,

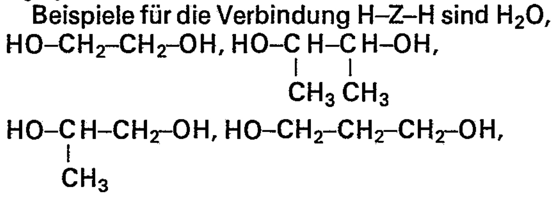

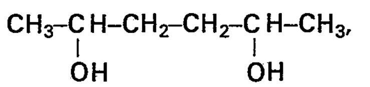

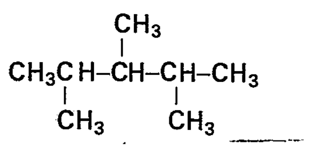

Verbindungen mit sekundären OH-Gruppen eignen sich besonders.

Das Verfahren zur Herstellung der Entschäumer wird im allgemeinen so durchgeführt, dass man das Polyorganosiloxan mit einem Lösungsmittel, vorzugsweise Toluol oder Xylol vermischt und anschliessend mit einem Gemisch aus $R^2OH$, H–Z–H und Toluol schnell verrührt. In diese Mischung wird bei Raumtemperatur etwa die stöchiometrische Menge $NH_3$ eingeleitet und ca. 1 Stunde bei ca. 70 °C gerührt.

Nach dem Abkühlen wird das ausgefallene Salz abfiltriert und bei etwa 100 °C im Vakuum das Lösungsmittel entfernt. Diese bevorzugten Reaktionsbedingungen können jedoch den jeweiligen Erfordernissen angepasst werden und somit – in dem Fachmann bekannter Weise – von den hier genannten abweisen.

Die anfallenden gelblich gefärbten klaren Lösungen besitzen je nach Zusammensetzung eine Viskosität zwischen 300 und 4500 mPa·s.

Die so hergestellten Siloxan-Polyoxyalkylen-Copolymeren eignen sich zur Herstellung von Entschäumungsmitteln für das kontinuierliche Schaumfärbeverfahren für Polware und textile Flächengebilde.

Für die Herstellung der Entschäumungsmittel ist weiterhin ein hydrophobes Siliciumdioxid erforderlich.

Ein hydrophobes Siliciumdioxid ist ein Siliciumdioxid, dessen oberflächenständige Hydroxylgruppe durch Umsetzung mit einer organofunktionellen Siliconverbindung beseitigt worden sind. Zur Umsetzung der Hydroxylgruppen können beispielsweise Trimethylchlorsilan, Dimethyldichlorsilan, Hexamethyldisiloxan, Hexamethyldisilazan oder Trimethylmethoxysilan verwendet werden. Die Umsetzung des Siliciumdioxids mit der organofunktionellen Siliconverbindung macht das Siliciumdioxid im Vergleich zu seinem ursprünglichen hydrophilen Charakter hydrophob.

Die BET-Oberfläche der hydrophoben Kieselsäuren kann zwischen 50 und 300 $m^2$ betragen. Optimale Ergebnisse werden erzielt, wenn die Oberfläche zwischen 80 und 140 $m^2/g$ beträgt.

Die Zugabe des hydrophoben Siliciumdioxids zu dem Siloxan-Polyoxyalkylen-Copolymeren kann in Mischaggregaten, Knetern oder Kugelmühlen erfolgen oder durch Einrühren mit Dissolverscheiben.

Es ist von Vorteil, wenn nach erfolgter Einbringung des Siliciumdioxids erwärmt wird, wobei die Erhitzungstemperatur zwischen 90 und 150 °C liegen kann, vorzugsweise zwischen 110 und 130 °C. Die Dauer des Erhitzungsvorganges beträgt zwischen 30 Minuten und 4 Stunden, bevorzugt sind 60 bis 90 Minuten.

Die Zugabemenge der Entschäumerzubereitung zur Färbe- und/oder Ausrüstungsflotte beträgt etwa 0,03 bis 2,0 g pro 1 Flotte. Sie richtet sich im allgemeinen nach der Art und Zusammensetzung der übrigen Flottenbestandteile sowie nach deren Konzentration.

Die nachfolgenden Beispiele sollen die Erfindung näher erläutern, ohne sie in ihrem Umfang einzuschränken.

Prozentangaben bedeuten, wenn nicht anders vermerkt, Gewichtsprozente.

Beispiel 1

(Herstellungsbeispiel für einen erfindungsgemässen Entschäumer)

297 g (2 Mol) Methyltrichlorsilan werden mit 18 g (0,3 Mol) Perfluorbutansulfonsäure und anschliessend mit 3996 g (13,5 Mol) Octamethylcycloetrasiloxan versetzt. Das Gemisch wird anschliessend auf 90 °C aufgeheizt und innerhalb 2 Stunden mit 800 g (13,4 Mol) Essigsäure versetzt. Während der Zugabe wird weiter hochgeheizt, so dass nach vollendeter Zugabe (HCl-Strom versiegt) die Temperatur von 130 °C erreicht wird. Es wird anschliessend 2 Stunden bei 130 °C gerührt.

Anschliessend wird das Produkt bei 130 °C und 67 mbar ausgeheizt.

Ausbeute: 4000 g
Acetat: 137 mVal/100 g.

Das nach obenstehender Beschreibung erhaltene Produkt wird auf folgende Weise weiter umgesetzt.

500 g (=1,02 Val Acetat) eines Acetoxypolysiloxans mit n=27 Dimethylsiloxyeinheiten werden mit 2000 g getrocknetem Toluol verrührt. Hierzu wird bei Raumtemperatur innerhalb von 15 Minuten ein Gemisch zugegeben, das aus 1477,3 g (0,79 Val) Polyether (mit einem Molgewicht von 1870 und einem Ethylenoxidgehalt von 45% und einem Propylenoxidgehalt von 55%, wobei 10% des im Molekül enthaltenen Propylenoxids am Ende der auf Butanol gestarteten Molekülkette als Block, der Rest zusammen mit dem angegebenen Ethylenoxidanteil in statistischer Verteilung vorliegt.), 10,35 g (0,23 Val) 2,3-Butandiol und 1500 g getrocknetem Toluol besteht. Ohne zu heizen werden bis zur Sättigung (mit ca. 8,67 g/h) innerhalb von ca. 2 Stunden 17,34 g getrockneter $NH_3$ eingeleitet. Anschliessend wird innerhalb 30 Minuten auf 70 °C aufgeheizt, wobei der Ammoniakstrom auf 11,9 g/h gesteigert wird. Es wird 90 Minuten weitergerührt und anschliessend langsam abgekühlt. 30 Minuten nach Beginn der Abkühlphase wird der $NH_3$-Strom abgestellt.

Die durch Salz stark getrübte Lösung wird filtriert und aus dem Filtrat das Lösungsmittel bei max. 100 °C und 20 mbar ausgeheizt. Man erhält einen klaren, leicht gelb gefärbten Rückstand.
Ausbeute: 1978,5 g
Viskosität: 640 mPa·s

$$N_D^{20} = 1,4475$$

Herstellung des Entschäumers

1860 g des nach obenstehender Vorschrift erhaltenen Polyether-Siloxan-Copolymers werden zusammen mit 40 g einer hydrophoben, gefällten Kieselsäure mit einer BET-Oberfläche von 110 $m^2/g$ in eine 3 Liter fassende Kugelmühle gegeben, die ausserdem mit 25 Porzellankugeln von 18 mm Durchmesser beschickt worden ist. Man lässt die gefüllte Kugelmühle bei etwa 50 Umdrehungen pro Minute während 5 Stunden mechanisch drehen und überführt anschliessend den von den Mahlkugeln abgetrennten Inhalt der Kugelmühle in ein heizbares und evakuierbares Gefäss mit Rührer. Unter Anlegen eines Vakuums von 52 mbar wird während 3 Stunden auf 110 °C erhitzt. Man erhält eine trübe, viskose Flüssigkeit.

Beispiel 2

(Herstellungsbeispiel für einen erfindungsgemässen Entschäumer)

0,79 g Methyltrichlorsilan (5,28 Mol), 22,2 kg Octamethylcyclotetrasiloxan (75 Mol) und 70 g Perfluorbutylsulfonsäure werden in einem Gefäss vorgelegt und auf 60 °C erwärmt. Ab 60 °C werden innerhalb einer Stunde 4,2 kg Essigsäure (70 Mol) zugegeben. Nach beendeter Zugabe der Essigsäure wird der Kesselinhalt bis zu einer Sumpftemperatur von 125 bis 130 °C aufgeheizt. Bei dieser Temperatur wird dann weitere 5 Stunden lang gerührt. Danach wird die Reaktionsmischung auf unter 50 °C abgekühlt und vorsichtig der Druck auf 50 mbar reduziert. Die in der Reaktionsmischung enthaltenen Leichtsieder werden nun bis zu einer Sumpftemperatur von maximal 135 °C und einem Endvakuum von ca. 20 mbar ausgeheizt.

Ausbeute: ca. 22 kg transparentes Produkt mit einer Viskosität von ca. 50 mPa·s.
Acetat: 67,5 mVal/100 g

Das nach obenstehender Beschreibung erhaltene Produkt wurde auf folgende Weise weiter umgesetzt.

15 kg des erhaltenen Acetoxysiloxans werden in einem Kessel zusammen mit 15 kg Toluol vorgelegt. Bei Raumtemperatur wird separat eine Mischung aus 18,8 kg eines auf Butanol gestarteten Polyethers mit dem Molgewicht von 1820, einem Ethylenoxidgehalt von 15% und einem Propylenoxidgehalt von 85%, wobei der gesamte enthaltene Ethylenoxidgehalt unmittelbar auf das Startermolekül folgend als Blockeinheit vorliegt, und 25 kg Toluol hergestellt und unter kräftigem Rühren in ca. 15 Minuten zu der vorgelegten Mischung zulaufen gelassen. Dann werden während 45 Minuten 172 g $NH_3$ eingeleitet (325 l/h). Die Mischung wird nun auf 80 °C erwärmt. Wenn diese Temperatur erreicht ist, werden 90 g Isopropanol zur Reaktionsmischung zugesetzt und rührt weitere 3 Stunden lang bei 80 °C und leitet während dieser Zeit $NH_3$ bis zur Sättigung der Reaktionsmischung ein.

Das Produkt wird auf Raumtemperatur abgekühlt, und die durch Salz getrübte Lösung filtriert und aus dem Filtrat das Lösungsmittel bei max. 100 °C und 20 mbar abdestilliert. Man erhält einen klaren, leicht gelb gefärbten Rückstand.

Herstellung des Entschäumers

18,4 kg des nach obenstehender Vorschrift erhaltenen Polyether-Siloxan-Copolymers werden mit einem Dissolver handelsüblicher Bauart bei 400 U/Min. gerührt und nach und nach 0,6 kg einer hydrophoben, gefällten Kieselsäure mit einer BET-Oberfläche von 130 $m^2/g$ bei Raumtemperatur während 1,5 Stunden verrührt. Die Mischung wird in einen heizbaren und evakuierbaren Kessel überführt und unter Anlegen eines Vakuums von 52 mbar während 3 Stunden auf 110 °C erhitzt. Man erhält eine trübe, viskose Flüssigkeit.

Beispiel 3

(Anwendung des erfindungsgemässen Entschäumers)

6 g eines Säurefarbstoffgemisches vom Typ TELON-Licht werden in einem Liter Wasser von 80 °C gelöst und 8 Liter kaltes Wasser zugegeben. Dazu gibt man 1,5 g einer Mischung aus 50% eines anionaktiven Na-alkylbenzolsulfonates und 50% eines mit 7 Mol Ethylenoxid umgesetzten para-Isononylphenols. Weiterhin werden 1,5 g des erfindungsgemässen Entschäumers des Beispiels 2 zugesetzt und die Mischung mit Hilfe eines Dispergiergerätes, das nach dem Prinzip einer schnell rotierenden Stiftmühle arbeitet, unter Zusatz von Luft zu einem fliessfähigen Schaum mit einem Verschäumungsgrad von 1 zu 9 verarbeitet. Hierbei ist der Verschäumungsgrad als das Verhältnis von Flotte zu Luft definiert. Dieser Schaum wird mit einer Dicke von 10 mm auf einer vorgenetzten PA-Teppichware (Velour, 600 g/m$^2$) durch ein Schaumauftragsgerät aufgebracht. Die durch den Schaum belegte Teppichware wird über ein Saugschlitzrohr geführt, wobei die Schaummatte ohne Gewichtsverlust zum Teil in den Flor gesaugt wird.

Unmittelbar folgend wird die Ware durch eine mit Sattdampf (ca. 100 °C) beschickte Kammer geführt, wobei der Schaum innerhalb von 15 Sekunden Verweilzeit zerfallen ist. Zur Fixierung des Farbstoffes verweilt die Teppichware 3 Minuten lang in der Dämpfungsvorrichtung und kann dann gegebenenfalls zur Entfernung der Hilfsmittel mit Wasser gespült werden.

Die Polware ist bis zum Grundgewebe gleichmässig durchgefärbt.

Beispiel 4
(Vergleichsbeispiel unter Verwendung eines organischen Entschäumers)

Entsprechend der Verfahrensweise des Beispiels 3 wurde zur Herstellung der Flotte folgende Zusammensetzung gewählt:

6 g eines Säurefarbstoffgemisches vom Typ TELON-Licht
1,5 g Mischung aus anionischen und nichtionogenen Tensiden
2 g Entschäumer auf Basis von Isooctylalkohol
9 l Wasser

Bei Durchgang der Ware durch die mit Sattdampf beschickte Kammer erfolgte zunächst ein langsamer Schaumzerfall, dem nach etwa 1 Minute ein starkes Aufblähen der Farbflotte folgte. Nach der Fixierung des Farbstoffes und einer Spülung mit Wasser war die verwendete Polware ungleichmässig gefärbt.

Beispiel 5
(Vergleich der Schaumbeständigkeiten geschäumter Flotten nach Entschäumerzusatz)

Einer Farbstoffflotte, bestehend aus 0,53 g/l Säurefarbstoff, 2,0 g/l einer 1:1-Mischung aus einem anionaktiven Na-Alkylbenzolsulfonat und einem para-Isononylphenol, das mit 7 Mol Ethylenoxid umgesetzt wurde, und 1,5 g/l Entschäumer wurde unter Zusatz von Luft mit Hilfe einer Verschäumungsapparatur im Verschäumungsverhältnis 1 zu 9 verschäumt und die Wässerung des Schaumes bei Raumtemperatur in einem Sedimentiergefäss in Abhängigkeit von der Zeit bestimmt. Zur Bestimmung der Wässerung wurden jeweils 1 l Schaum unmittelbar nach der Herstellung verwendet.

Folgende Entschäumer wurden miteinander verglichen:

I Erfindungsgemässer Entschäumer des Beispiels 2
II Erfindungsgemässer Entschäumer des Beispiels 1
III Handelsübliche 30%ige Siliconentschäumeremulsion
IV Handelsüblicher Entschäumer auf Basis von Polyether-Siloxan-Copolymeren
V Organischer, handelsüblicher Entschäumer auf Basis von Isooctylalkohol.

Wässerung des Schaumes nach t Sekunden (ml)

| Entschäumer | 10″ | 20″ | 60″ | 120″ | 300″ |
|---|---|---|---|---|---|
| I | 0 | 0 | 1 | 5 | 25 |
| II | 0 | 0 | 1 | 4 | 20 |
| III | 1000 | kein Schaum herstellbar | | | |
| IV | 700 | 1000 | 1000 | 1000 | 1000 |
| V | 450 | 900 | 1000 | 1000 | 1000 |

**Patentanspruch**

1. Verfahren zum kontinuierlichen Färben von textilen Materialien, dadurch gekennzeichnet, dass die Färbung in Gegenwart von Entschäumern, bestehend aus

a) mindestens 80 Gew.-% eines Polyoxyalkylen-Siloxan-Copolymers der allgemeinen Formel

$$[R^1Si(OSiR_2)_n]_m Z_{m-1} (OR^2)_{m+2},$$

in der

R eine gegebenenfalls halogensubstituierte Alkylgruppe mit bis zu 4 C-Atomen,

$R^1$ den Substituenten R bzw. einen Phenylrest,

$R^2$ eine Gruppe der Zusammensetzung

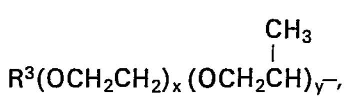

Z eine difunktionelle Einheit –O– oder

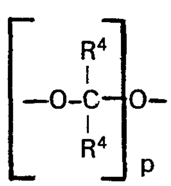

darstellt, wobei

$R^3$ einen Kohlenwasserstoffrest mit bis zu 6 C-Atomen,

$R^4$ unabhängig voneinander Wasserstoff oder $R^3$,
n eine Zahl zwischen 3 und 40,
m eine Zahl zwischen 1 und 15,
x eine Zahl zwischen 0 und 68,
y eine Zahl zwischen 0 und 52,
x+y eine Zahl zwischen 1 und 68,
p eine Zahl zwischen 2 und 12 bedeutet, und
b) 0,5 bis 20 Gew.-% eines hydrophoben Siliciumdioxids, durchgeführt wird.

**Revendication**

Procédé de teinture en continu de matières textiles, caractérisé en ce qu'on effectue la teinture en présence d'agents antimousses constitués de:

a) au moins 80% en poids d'un copolymère de polyoxyalkylène-siloxane de formule générale:

$$[R^1Si(OSiR^2)_n]_m Z_{m-1} (OR^2)_{m+2}$$

dans laquelle

R représente un groupe alkyle contenant jusqu'à 4 atomes de carbone et éventuellement substitué par un atome d'halogène,

$R^1$ représente les substituants R ou un groupe phényle,

$R^2$ représente un groupe de la composition

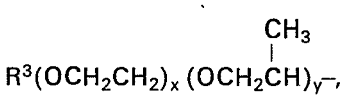

Z représente un motif difonctionnel –O– ou

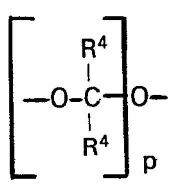

où

$R^3$ représente un groupe d'hydrocarbure contenant jusqu'à 6 atomes de carbone,

les radicaux $R^4$ représentent chacun indépendamment l'un de l'autre un atome d'hydrogène ou $R^3$,

n est un nombre compris entre 3 et 40,
m est un nombre compris entre 1 et 15,
x est un nombre compris entre 0 et 68,
y est un nombre compris entre 0 et 52,
x+y est un nombre compris entre 1 et 68,
p est un nombre compris entre 2 et 12, et
b) 0,5 à 20% en poids d'un dioxyde de silicium hydrophobe.

**Claim**

1. Process for the continuous dyeing of textile materials characterised in that the dyeing is carried out in the presence of defoamers consisting of

a) est least 80% by weight of a polyoxyalkylene-siloxane copolymer of the general formula

$$[R^1Si(OSiR_2)_n]_m Z_{m-1} (OR^2)_{m+2},$$

in which

R represents an optionally halogen-substituted alkyl group with up to 4 C atoms,

$R^1$ represents the substituent R or a phenyl radical,

$R^2$ represents a group of the composition

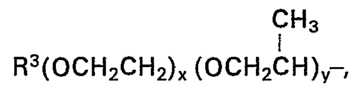

Z represents a difunctional unit –O– or

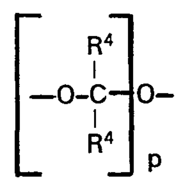

wherein

$R^3$ denotes a hydrocarbon radical with up to 6 C atoms,

$R^4$ denotes independently of one another hydrogen or $R^3$,

n denotes a number between 3 and 40,
m denotes a number between 1 and 15,
x denotes a number between 0 and 68,
y denotes a number between 0 and 52,
x+y denotes a number between 1 and 68, and
p denotes a number between 2 and 12, and
b) 0.5 to 20% by weight of a hydrophobic silicon dioxide.